# EUROPEAN PATENT APPLICATION

(11) **EP 2 716 953 A2**
(43) Date of publication of application: **09.04.2014**
(21) Application number: 13186836.6
(22) Date of filing: 01.10.2013
(51) Int. Cl.: F16L 55/027

(54) **Flow rate and pressure reduction assembly**

(30) Priority: 05.10.2012 US 201261710534 P
(71) Applicant: Roy E. Roth Company, Milam, IL 61264 (US)
(72) Inventor: Roth, Paul E., Lynn Center, Illinois 61262 (US); Krebs, Linn S., Colona Illinois 61241 (US); Marske, Tim A., Davenport Iowa 52803 (US)
(74) Representative: Hanson, William Bennett

(57) **Abstract**

A flow rate and pressure reduction assembly (10) includes a tubular housing (12) and a cylindrical plug (15), having at least two helical grooves (16) in the outer surface, positioned within the tubular housing. The flow rate differential of the assembly is between about 1.14 to 34.11/min (0.3 to 9 gpm).

## Description

### FIELD OF THE INVENTION

The present invention relates to a grooved control member cooperating with a bore in a flange member to provide a control assembly which predeterminedly restricts the flow rate and pressure of a fluid passing through the control assembly.

### BACKGROUND OF THE INVENTION

Fluid pumping devices are utilized in various processing systems, for example, in petroleum, chemical and water applications. These pumping devices broadly include an electric or magnetic motor which rotates a shaft to drive the pumping portion of the pumping device. The pumping portion of the pumping device includes, either externally or within the pumping device, some type of sealing arrangement to separate the interior of the fluid pumping portion from the separate electrical or magnetic motor driven portion of the pumping device. The conventional sealing arrangements utilized may be a conventional packing gland, a stuffing box or other types of interacting sealing members which maintain a seal between the fluid pumping portion and the separate motor driven portion of the fluid pumping device.

However, such conventional sealing arrangements are prone to deterioration after extended use. This deterioration is due to several factors; such as, abrasion between the sealing arrangement engaging or contacting about the rotating shaft; the build-up of heat due to friction between the sealing arrangement and the rotating shaft; and the failure to effectively control the delivery of lubricants to the sealing arrangement to prevent frictional heat build-up of the sealing arrangement and to maintain the sealing arrangement free of abrasive particles.

Several devices have been suggested for controlling the flow rate and pressure of the lubricants to the above-described sealing arrangements to maximize the lubrication of, the cooling of and the removal of debris from the sealing arrangement. These devices include needle valves, gate valves, ball valves, flow meters, spiral wound tubes and orifice openings in the line delivering a lubricant to the sealing assembly. However, these devices each require either an adjustable or moveable control member or a fixed orifice to regulate the flow and pressure of the lubricant to the sealing arrangement.

Because the above-described fluid pumping devices are utilized in petroleum and chemical applications, the American Petroleum Institute (API) requires that each valve, tube, or orifice plate which controls the flow rate and pressure may not be less than 3.18 mm (1/8^{th} inch) in diameter. Accordingly, attempts to restrict and control the flow rate and pressure without setting the diameter of the valves, tubes, or orifice plates to less than 3.18 mm (1/8^{th} inch) in diameter have not been successful.

### SUMMARY OF THE INVENTION

In accordance with the present invention, the foregoing problems associated with controlling the flow rate and pressure of lubricants to cool, cleanse, and lubricate the sealing arrangements of fluid pumping devices utilized in petroleum and chemical operations are alleviated.

It is a further object of the present invention to predeterminedly control the flow rate and pressure of lubricants entering the sealing arrangements associated with fluid pumping devices to remove the heat from the sealing arrangement and to provide increased wear life of the sealing arrangement.

In accordance with the present invention, the control assembly for controlling the flow rate and pressure of a fluid passing through the control assembly is comprised of a flange mounting member having a cylindrical bore extending therethrough and a machined helical grooved plug positioned within and engaging the cylindrical bore. The outer peripheral edges of the plug member cooperate with the inner annular surface of the cylindrical bore of the flange member to provide a spiral path of travel for the fluid passing through the control member or assembly. The machined spiral helical grooved plug that is positioned within the bore of the flange member includes an inlet end and an outlet end, with the fluid flow passing around the spiral groove in the plug member and the inner surface of the cylindrical bore of the flange member from the inlet end to the outlet end.

The present invention provides a controlled flow differential rate and reduced pressure assembly wherein the reduced flow rate of the fluid through the control assembly is determined by the length of the plug as well as by the number of grooved turns per a given distance or length of the plug.

Additionally, when the present invention is applied to fluid pumping devices utilized in petroleum and chemical applications, the 3.18 mm (1/8^{th} inch) in diameter limitation for the precise control of flow rate and pressure in valves, tubes or orifice plates is readily achieved without consideration of the depth or size of the helical groove in the plug portion of the control assembly.

Additionally, the flow rate and pressure control apparatus of the present invention may be used in any application wherein the precise and predetermined flow differential of the fluid flow rate through the assembly is required. Importantly, such control is achieved without any movement of the grooved plug relative to the cylindrical bore within the flange member. Although the structure of the present invention may appear to incorporate the principles of an Archimedean screw, there is no movement of the shaft or grooved plug within the elongated cylinder of the flange member to provide the predetermined reduction in flow rate and pressure that is obtained by the present invention.

The present invention consists of certain novel structures and processes hereinafter fully described and illustrated in the accompanying drawings, it being understood that changes in the details may be made without departing from the scope of the invention as set out in the claims.

### DESCRIPTION OF THE DRAWINGS

The foregoing description and other characteristics, objects, features and advantages of the present invention will become more apparent upon consideration of the following detailed description, given by way of example only, having references to the accompanying drawings, wherein:

FIG. 1 is a perspective view of a flange member having the grooved plug member mounted within the bore of the flange member to provide the flow rate and pressure reduction assembly in accordance with the present invention;

FIG. 2 is a cross-sectional view taken along line 2-2 of the flow rate and pressure reduction assembly shown in FIG. 1;

FIG. 3 is a cross-sectional view of a grooved plug in accordance with the present invention; and

FIG. 4 is a cross-sectional view illustrating the helical path of travel along the grooved plug of FIG. 3 in accordance with the present invention;

### DESCRIPTION OF A PREFERRED EMBODIMENT

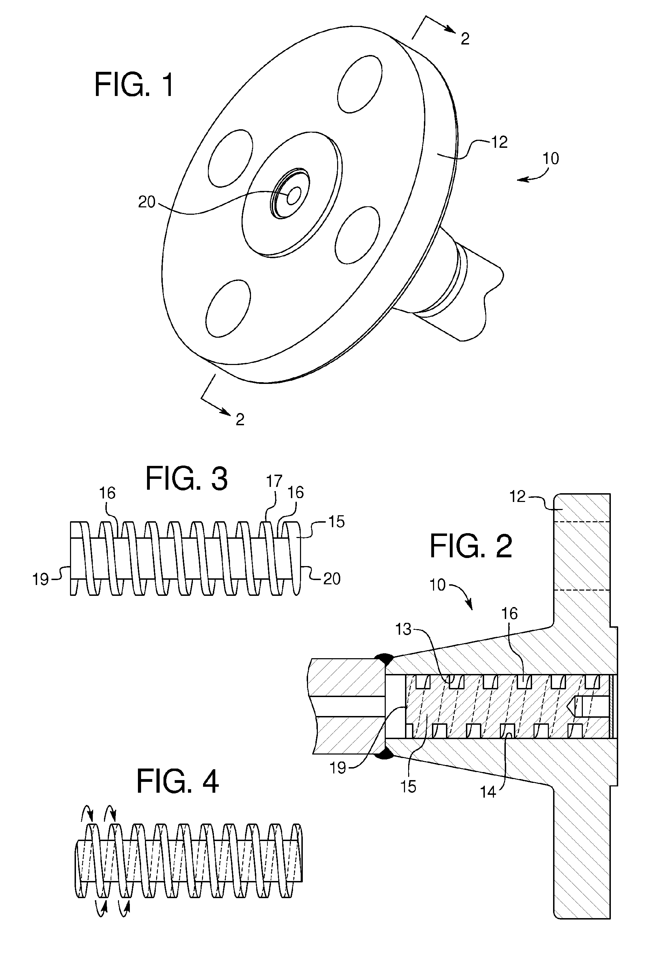

Referring now to the drawings wherein like reference numerals have been used throughout the several views to designate the same or similar parts, there is illustrated in FIGS. 1 and 2 a flow rate and pressure reduction control assembly 10 in accordance with the present invention. The flow rate and pressure control assembly 10 is comprised of a flange mounting member 12 having a cylindrical bore 14 extending therethrough and a machined plug 15 positioned within the cylindrical bore. The machined plug 15 includes helical grooves 16 spirally wound around the outer surface 17 of the plug, as shown in FIG. 3. The outer peripheral edge surfaces 17 of the plug cooperate with the inner surface 14 of the cylindrical bore 13 of the flange member 12 to provide a spiral path of travel for the fluid through the control assembly 10, as shown in FIG 2 and 4. The machined spiral helical grooved plug 15, that is positioned within the bore of the flange member, includes an inlet end 19 and an outlet end 20, with the fluid flow passing through the spiral grooves 16 in the plug between the grooves and the inner surface of the cylindrical bore of the flange member 14, as shown by the arrows in FIG. 4.

The present invention provides a flow differential rate and/or pressure reduction assembly wherein the flow rate of the fluid through the control assembly is determined by the length of the plug, as well as by the number of helical grooves 16 per a given distance or length of the plug. For example, the present invention has particular application in reducing the flow rate of fluids entering sealing arrangements associated with fluid pumping devices utilized in petroleum and chemical operations. The fluids entering such sealing arrangements act as lubricants which cool, cleanse and lubricate the sealing arrangements.

For example, the number of helical turns of the grooves in the outer surface 17 of the plug member 15 may vary from between about 2 to about 60, depending upon the predetermined flow differential rate required. It has been determined that the 3.18 mm (1/8^{th} inch) in diameter helical groove would provide about 5 to 7 helical turns per 25.4 mm (1 inch) in length of the plug. Thus, if the plug is 76.2 mm (3 inches) in length and about 14.29 mm (9/16^{th} of an inch) in diameter, about 15 to 20 helical turns are provided by the flow rate and pressure reduction control assembly 10.

Also, the present invention provides a flow rate differential between a minimum rate of 1.14 litres (0.3 US gallons) per minute and a maximum rate of 34.1 1/min (9.0 gpm). Thus, the buildup of back pressure resulting by the fluid passing through the flow rate and pressure control assembly provides the desired controlled flow rate differential.

The present invention provides significant cost savings in the maintenance of and the modification of existing fluid pumping devices to change or adjust the flow rate differential. Before the present invention, the flow rate change necessitated modifying the internals of the fluid pumping device, such as the liners, impeller, and restrictive bushings for each stage of the fluid pumping device. All these modifications cost time, money, and down time. In some instances, the pumping device may even require return to the manufacturer for these modifications.

Also, it is within the scope of the present invention that the flow rate and pressure reduction control assembly of the present invention may also be adapted to associate with a flange adaption member that is connected to the inlet or outlet to provide a drain/vent for petroleum/chemical fluid pumping devices, which is the subject of European Patent Application No. 13185843.3 assigned to the assignee of the present application.

## Claims

1. A flow rate and pressure reduction assembly for use with fluid pumping devices, comprising:
(a) a tubular housing (12); and
(b) a cylindrical plug (15) having at least two helical grooves (16) within an outer cylindrical surface of said plug, with said plug (15) positioned in said tubular housing (12) to predeterminedly control the flow rate and pressure of a fluid through the assembly.

2. The flow rate assembly in accordance with claim 1 wherein the fluid flow rate is controlled between about 1.14 to 34.11/min (0.3 to 9 gpm).

3. The flow rate assembly in accordance with claim 1 or 2 wherein said cylindrical plug (15) has a diameter of between about 12.7 to 25.4 mm (1/2 to 1 inch).

4. The flow rate assembly in accordance with claim 3 wherein said cylindrical plug (15) has a diameter of about 14.29 mm (9/16^{th} of an inch).

5. The flow rate assembly in accordance with any preceding claim wherein said at least two helical grooves (16) each have a depth and width of about 3.18 mm (1/8th of an inch).

6. The flow rate assembly in accordance with any preceding claim wherein said tubular housing is a flange member (12) having a tubular bore (13) therein.
